# EUROPEAN PATENT SPECIFICATION

(11) **EP 1 618 640 B1**
(45) Date of publication and mention of the grant of the patent: **23.03.2011**
(21) Application number: 04729433.5
(22) Date of filing: 26.04.2004
(51) Int. Cl.: H02H 9/00

(54) **METHOD AND APPARATUS FOR ELECTRICAL POWER TRANSFER**
VORICHTUNG UND VERFAHREN ZUR ÜBERTRAGUNG ELEKTRISCHER LEISTUNG
PROCEDE ET SYSTEME DE TRANSFERT DE COURANT ELECTRIQUE A UN CONSOMMATEUR

(30) Priority: 30.04.2003 GB 0309801
(43) Date of publication of application: 25.01.2006
(73) Proprietor: Bombardier Transportation GmbH, 10785 Berlin (DE)
(72) Inventor: REICHELT, Reinhard, 79790 Küssaberg (DE); VON THADEN, Thoralf, 79650 Schopfheim (DE)
(74) Representative: Brunotte, Joachim Wilhelm Eberhard
(86) International application number: PCT/EP2004/004430
(87) International publication number: WO 2004/098013

(56) References cited:
- DE-A1- 2 831 495
- US-A- 3 748 534
- US-A- 5 483 142
- US-A1- 2002 191 426

## Description

The present invention relates to an arrangement for transferring electric power from a power source to an electric power consumer, in particular to a driving motor of a railroad vehicle. Furthermore, the present invention relates to a method of operating such an arrangement.

The arrangement comprises an input side for connecting the arrangement to the power source; a direct current intermediate circuit, wherein the intermediate circuit comprises a first and a second direct current connection line, the first and the second direct current connection lines being connected to the input side; and a current converter for inverting a direct current and for delivering alternating current power to the power consumer. The current converter is connected to the first and to the second direct current connection line. At least one capacitor is provided in the intermediate circuit. The capacitor has two opposite poles, wherein a first pole is connected to the first direct current connection line and wherein the second pole is connected to the second direct current connection line.

The input side of the intermediate circuit is not necessarily located opposite to the side of the power consumer. As a consequence, the direct current connection lines do not necessarily carry the full electric current from the power source to the power consumer during operation of the arrangement. Rather, it may be the case that they carry the current to and from the intermediate circuit capacitor(s) only and, if applicable, to and from a filter circuit. The term "power source" covers any electric device or network that is adapted to deliver electric power, e.g. an AC or DC railroad power network.

The at least one capacitor is provided in order to avoid or reduce a frequency feedback from the intermediate circuit to the power source. Especially when the power consumer is a high power consumer, such as a driving motor of a railroad vehicle, the frequency feedback might become relevant and the allowed limits concerning electromagnetic vulnerability (EMV) might be exceeded, if the capacitor or a part of the capacitors are defect.

The limits concerning the EMV during operation of railroad traction vehicles have been tightened-up several times. Therefore, it has become more and more important to guarantee the function of the at least one capacitor.

It has been proposed to provide a protecting element, which is connected in series to the capacitor (see for example DE 28 31 495). This protecting element is adapted to limit the discharging current of the capacitor in case of a defect or malfunction in the arrangement or of any electrically connected parts. In addition, or as an alternative, a fuse can be connected in series to the capacitor as a protecting element. If the protecting element becomes defect or the fuse has cleared, the capacitor cannot be charged and cannot smoothen the voltage in the intermediate circuit.

It is difficult and causes additional effort to watch the function of the protecting element. The costs for an electronic device (such as the one described in DE 28 31 495) as protecting element are comparatively high and would further be increased by monitoring its function. Embodiments, which are available on the market, do not include or support a monitoring function. Some types of fuses, which are suitable protecting elements, comprise an optical indicator for indicating whether the fuse has cleared. An auxiliary contact can be connected to the fuse for monitoring the function of the fuse. However, the indicator might not reliably show the state of the fuse. In particular, practical experiences have shown that a short circuit in the intermediate circuit due to a malfunction of a current converter does not necessarily cause a powerful arc and, as a result, the optical indicator does not react. Furthermore, the additional effort for connecting and using the auxiliary contact cannot be neglected.

As a result, when a protecting element has become defect or has cleared, it is difficult to detect that the corresponding capacitor is no longer available, unless the whole system becomes unstable due to a significantly reduced capacitance or unless other properties or parameters of the system are significantly influenced. As a consequence, the capacitors that are still available will be overloaded and their lifetime will be reduced. Furthermore, the above-mentioned limits concerning EMV might not be met.

US 5 483 142 discloses a capacitor precharge current limiting circuit which limits the charging current by modulation of the switching curcuit.

US 2002/191426 discloses a circuit that limits inrush current to a DC supply of an inverter using a switch in series with the DC supply.

It is an object of the present invention to provide an arrangement as well as a method of the type indicated above, which allow to check the function of the at least one capacitor.

In particular, it is desirable to detect whether one or more than one of a plurality of the capacitors is/are defect or is/are disconnected from the first and/or second direct current connection line of the intermediate circuit.

It is proposed to measure a time interval of charging and/or discharging the at least one capacitor and to evaluate the time interval in order to decide whether the capacitor has been charged and/or discharged or in order to decide whether all the capacitors have been charged and/or discharged.

Regarding the arrangement, it is proposed to provide a measurement device which is connected to the intermediate circuit wherein the measurement device is adapted to measure a time interval of charging and/or discharging the at least one capacitor. Furthermore, an evaluation device may be provided, which is connected to the measurement device and which is adapted to evaluate the time interval in order to decide whether the capacitor has been charged and/or discharged or to decide whether all the capacitors have been charged and/or discharged.

The time interval of the charging and/or discharging can be measured in any suitable situation. However, it is preferred to measure the time interval of charging during an initial charging after a period in which the arrangement has not been operated, e.g. when a railroad traction vehicle is prepared for operation. On the other hand, it is preferred to measure the time interval of discharging at the end of a period in which the arrangement has been operated, e.g. at the end of a period of operation of the railroad vehicle.

A resistor can be used in a charging/discharging circuit of the arrangement, specifically for charging/discharging. It may not be connected or may be by-passed during the normal operation of the arrangement. The resistor may be connected and/or switched in series to the power source, so that the power source can be used for charging the at least one capacitor. Due to the resistor, the charging/discharging time can be prolonged and, thereby, the precision of time measurement can be increased. For the purpose of discharging, the resistor may be connected to the first direct current connection line, at one side, and may be connected to the second direct current connection line, at the other side. For example, the resistor may be connected in series to a switch, e.g. a semiconductor switch, such as an IGBT (insulated gate bipolar transistor), for switching on and off the discharging process.

In case of an AC power source, it is known to provide a resonant filter branch for eliminating frequency signals in the intermediate circuit during operation of the arrangement. As a result, oscillations of the intermediate circuit voltage as a function of time usually occur. Therefore, it is preferred to measure the time interval during charging of the at least one capacitor only.

The time interval measurement may be performed by a control device for controlling the operation of the current converter and/or other parts of the arrangement. The measurement device, the evaluation device and/or further means for monitoring the at least one capacitor's function may be realised by hardware and/or software. In particular, existing measurement and/or evaluation facilities can be used, so that the additional effort for monitoring the capacitor's function is low.

In particular, the measurement device is connected to a voltage measuring means, which is adapted to determine a measure of a voltage that is dependent on the charging state of the at least one capacitor. Preferably, the voltage is measured between the first and the second direct current connection lines. Alternatively, the voltage can be measured directly at the capacitor. However, the measurement between the first and the second direct current connection lines has the advantage that the effort is low and that the measure represents the charging state of all capacitors (if there are more than one). Further, in high power applications, such as railroad traction vehicles, it is known to measure the voltage between the first and the second direct current connection lines for other purposes. Thus, no additional measurement equipment is necessary.

The connection between the measurement device and the voltage measuring means allows taking the charging state into account, when the decision is made whether the capacitor has been charged and/or discharged or whether all the capacitors have been charged and/or discharged. For example, phases of the charging/discharging process can be excluded in which undesirable influences occur and/or in which the precision of measurement is low, so that the evaluation of the time interval would be affected. As a consequence, the reliability of the decision can be increased and/or the time interval of charging/discharging can be reduced.

In particular, the beginning and/or the end of the time interval can be triggered depending on the measured voltage. This corresponds to an embodiment of the arrangement, wherein the voltage measuring means is combined with a trigger for triggering the beginning and/or the end of the time interval depending on the measured voltage. For example during the charging, the measured voltage may be used to start the time measurement at a defined (e.g. preset) voltage value, in order to eliminate the effect of the charging state before the beginning of the charging process. In particular, the charging process may start at different voltages of the at least one capacitor and, therefore, the charging time varies. The precision of voltage measurement itself is higher at higher voltage values. Thus, it is preferred to choose the defined voltage value at a level for which the precision has reached a level sufficient for the desired evaluation reliability.

In a further embodiment, a measure of a charging voltage is determined, which is used for charging the at least one capacitor. Alternatively or additionally, a measure of a voltage is determined, wherein the voltage influences the discharging of the at least one capacitor, e.g. a voltage between the two direct current connection lines. This allows taking into account the measure, when the decision is made whether the capacitor has been charged and/or discharged or whether all the capacitors have been charged and/or discharged. In the arrangement, this corresponds to an embodiment with a voltage determination device connected to the evaluation device. The voltage determination device is adapted to determine a measure of a voltage used for charging the at least one capacitor and/or to determine a measure of a voltage which influences the discharging of the at least one capacitor.

As a result, the influence of varying voltages on the evaluation can be eliminated and/or compensated.

In an embodiment, which corresponds to the presently known best mode of the invention, the time interval of charging and/or discharging the at least one capacitor is repeatedly measured (e.g. every time when the operation of a railroad vehicle is prepared) and at least one duration value of a previous time interval of charging/discharging is taken into account, when the decision is made whether the capacitor has been charged and/or discharged or whether all the capacitors have been charged and/or discharged.

In the arrangement, a memory device for storing at least one value of the time interval may be provided, wherein the memory device is connected to the evaluation device.

For example, the measured time interval or a corresponding value can be compared to the at least one value stored. If the difference is significant, e.g. greater/greater or equal than a threshold value, it can be concluded that at least a part of the capacity cannot be used during operation of the arrangement. In order to protect the arrangement (in particular the remaining capacitor/s) and/or other facilities, several actions can be taken, depending on the result of the evaluation and/or on the situation, for example: (a) the power of the power consumer is limited, (b) the arrangement is switched off, (c) the reason for a reduction of the capacity is analysed and/or (d) a defective element, such as a fuse or capacitor, is replaced.

In particular in the case of a plurality of capacitors in the intermediate circuit, which are arranged in parallel to each other, it is preferred to use a time interval comparison value for all capacitors and/or groups of capacitors for the evaluation. This means that only one comparison value is needed, if the capacitors (or groups) have the same capacitance. Therefore, the number of capacitors, which are not available during operation, can be determined.

One advantage of the invention is that it can be detected whether a protecting element (which is connected in series to the capacitor) has disconnected the capacitor from one of the direct current connection lines, e.g. due to a defect and/or due to an overload. A signal may be created in order to indicate that one or more than one protecting elements have to be replaced.

Further, the aging of the capacitor/s can be monitored. In particular, a comparison value corresponding to the time interval of charging and/or discharging the at least one capacitor can be stored and used in order to decide whether the capacitance of the at least one capacitor has degraded.

In the following, preferred embodiments of the present invention are described by way of example and by reference to the accompanied drawing. The figures of the drawing schematically show:
- Fig. 1: an intermediate circuit having four capacitors, which are connected in parallel to each other, an AC/DC-converter connected to the intermediate circuit and a charging circuit connected to the intermediate circuit as well as to the AC/DC-converter;
- Fig. 2: an arrangement 1 comprising an intermediate circuit, an AC/DC-converter (or another device on an input side of the intermediate circuit), a current converter connected to the intermediate circuit, a driving motor of a railroad vehicle connected to the current converter and a process control device for controlling the operation of the arrangement and for controlling other functions of driving facilities in a railroad vehicle;
- Fig. 3: a more detailed view of the process control device; and
- Fig. 4: a flow-chart of a process of operating the arrangement shown in Fig. 2, wherein the process comprises five consecutive steps.

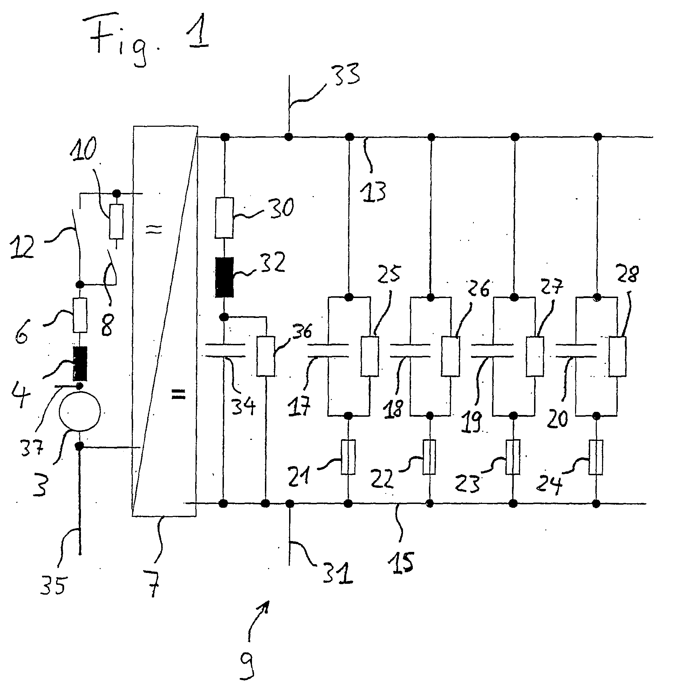

The AC/DC converter 7 shown in Fig. 1 is, on one side, connected to an intermediate circuit 9 and is, on the other side, connected to an AC power source 3, in particular a single-phase railroad power network. The term "power source" includes an optional transformer in order to transform the AC voltage to the needs of the arrangement. Alternatively, the power source may be a DC power source. In this case, the AC/DC converter 7 can be omitted or is substituted by a DC/DC converter or by an inductor.

A first side of the power source 3 is directly connected to the AC/DC converter 7. A second side of the power source 3 is connected to the AC/DC converter 7 via a main interrupter 12 for interrupting the connection. A series connection, which comprises a charging contactor 8 and a charging resistor 10, is arranged in parallel to the main interrupter 12. This series connection is used for charging the capacitors 17 to 20 in the intermediate circuit and, if applicable, other capacitors which are connected to the arrangement.

The connection between the power source 3 and the AC/DC converter 7 may comprise further elements and/or devices, e.g. a transformer. In Fig. 1, these elements and/or devices are represented by an inductor 4 and by a resistance 6.

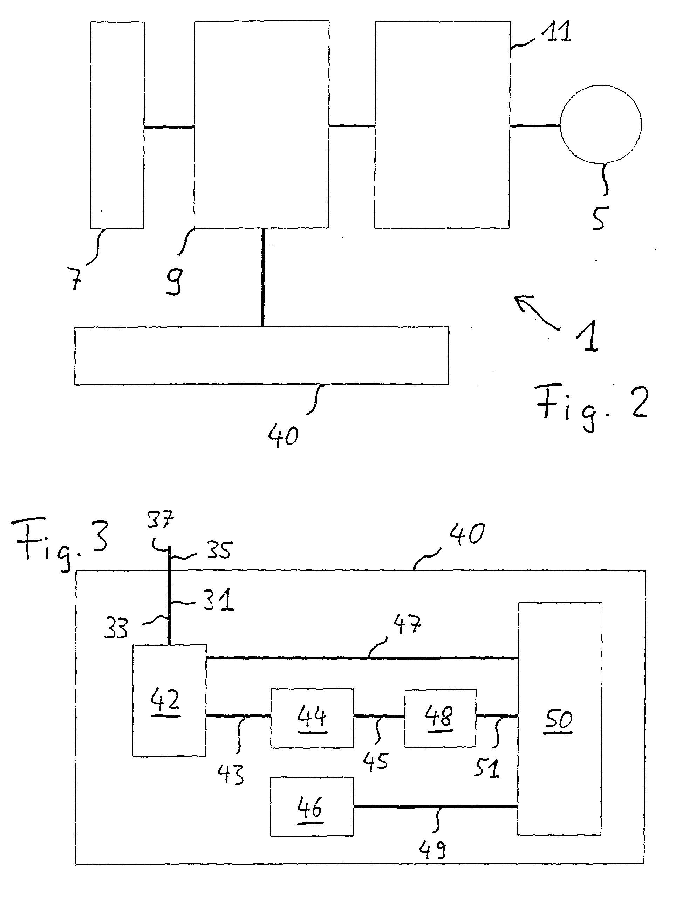

The intermediate circuit 9 shown in Fig. 1 comprises two direct current connection lines 13, 15. These lines 13, 15 connect a DC side of the AC/DC converter 7 with a DC/AC current converter 11 (see also the schematic view of Fig. 2). However, in other embodiments, the current converter may be located at the input side of the intermediate circuit.

A resonant filter branch for eliminating frequency signals in the intermediate circuit comprises a resistor 30, an inductor 32 and a capacity 34 connected in series to each other. Furthermore, a second resistor 36 is connected in parallel to the capacitor 34, which may comprise a plurality of capacitors. The resonant filter branch is connected at both sides to one of the direct current connection lines 13, 15.

The arrangement 1, in particular the intermediate circuit 9, may comprise more elements and/or parts as shown in Fig. 1, e.g. an inductor in one of the direct current connection lines 13, 15.

Four capacitors 17 to 20 are arranged in parallel to each other. Each capacitor is connected in series to a fuse 21 to 24, so that each series connects the direct current connection lines 13, 15. The number of capacitors in parallel to each other may be different and/or the "capacitors" 17 to 20 may consist of a plurality of capacitors (connected in series and/or in parallel to each other). The capacitors are provided in order to reduce the frequency feedback from the intermediate circuit to the power source 3, in particular due to an alternation of the load caused by the power consumer.

The current converter 11 (Fig. 2) may be constructed as known from the prior art. For example, it comprises six electronic switches. A diode may be connected anti-parallel to each of the six electronic switches. Each two of the electronic switches may be connected in series and the series connection may be connected at both sides to one of the direct current connection lines 13, 15. Further, each of the three series connections may be connected to one phase of a three-phase driving motor of a railroad vehicle, e.g. the driving motor 5 shown in Fig. 2. The electronic switches may be controlled by an additional device, e.g. by the process control device (40) shown in Fig. 2.

In a preferred embodiment, the fuses 21 to 24 are semiconductor fuses, i.e. fuses that are designed to protect a power semiconductor element from damage due to electric overload. Semiconductor fuses (sometimes referred to as "rectifier fuses" or "ultra fast fuses") comprise a very short clearing time in case of an overload. Thus, the electric connection is interrupted before the current can reach its maximum. Further, semiconductor fuses that are designed for high power applications can reliably protect circuit elements at high surrounding temperatures (e.g. 50° C and more), which occur due to dissipation of electric energy in railroad traction vehicles.

Instead of fuses any other type of protecting element can be used. Further, the invention also applies to capacitors in intermediate circuits, which are not combined with a protecting element connected in series to the capacitor.

A discharging resistor, having a high DC resistance, is connected in parallel to each of the capacitors 17 to 20, so that the capacitors 17 to 20 will be discharged after operation.

The time-dependent function, which describes the charging or discharging of the at least one capacitor in the intermediate circuit, can be determined, e.g. using an equivalent circuit diagram of the arrangement. For example in the simple case of a series connection consisting of a DC resistance and of the at least one capacitor, the time-dependent charging function f(t) is proportional to the term (1 - exp(-xt)), wherein t denotes the time, wherein exp denotes the exponential function with Euler's number as base (e-function) and wherein x is the product of the total capacitance and the resistance.

Alternatively, the charging/discharging characteristic of the at least one capacitor can be determined using a standard simulation tool for simulating the operation and/or characteristic properties of electric circuits.

However, according to the presently known best mode of the invention, it is not absolutely necessary to know the charging characteristic theoretically. Rather, the time for charging/discharging (or for a part of the process) can be determined and can be compared to the time of at least one previous charging/discharging process of the same kind. The only pre-requisite for this is that the whole capacity is available for charging/discharging in at least one of the previous charging/discharging processes. In this case, the comparison enables to determine whether the capacitor has been charged and/or discharged or to decide whether all the capacitors have been charged and/or discharged.

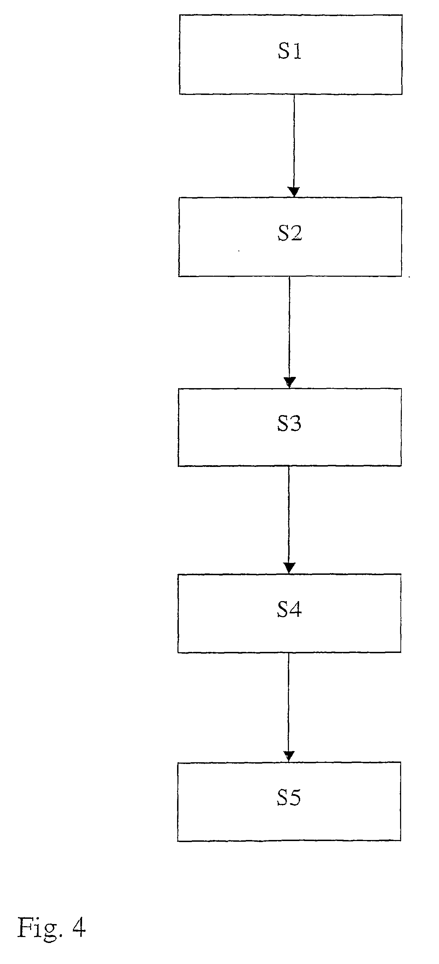

In the flow-chart shown in Fig. 4, S1 denotes a step of starting a process of charging the at least one capacitor of the intermediate circuit. Alternatively, a discharging process of the at least one capacitor can be started. If there is a resonant filter branch as, for example, shown in Fig. 1, it is preferred to evaluate the time interval of the charging rather than the discharging process, since oscillations may be superimposed to the decreasing voltage. Furthermore, it is preferable to evaluate the time interval on or before the operation of the arrangement for transferring electric power.

In the example of Fig. 1, closing the charging contactor 8, while the main interrupter 12 is open, starts the charging process. As a consequence, the charging current is carried and limited by the charging resistor 10.

Since the initial charging state of the at least one capacitor may differ, it is preferred to measure the capacitor's charging state, e.g. the voltage between the first and the second direct current connection lines, and to start the time measurement at a defined charging state, e.g. at a start voltage of 200 V for a high power arrangement, which is connected to a power source having, for example in case of an AC power source, a peak voltage in the range of 1.2 to 2.5 kV. In case of a DC power source, the voltages may be substantially higher. The time measurement is started at step S2 in Fig. 4.

At step S3, the time measurement is stopped. For example, it is stopped at a defined charging state of the at least one capacitor or, preferably, at a defined charging state, but depending on the voltage of the power source that is used for charging. E.g. the time measurement is stopped, when the voltage between the first and the second direct current connection lines reaches a defined value of about 2/3 of the peak voltage of the power source, for example 64 % of the peak voltage. In case of a DC power source, the defined value may be referred to the instantaneous voltage of the DC power source. Since the end of the time interval depends on the voltage used for charging, the adverse effect of voltage variations can be eliminated, in particular the effect of a prolongation of the charging time due to a small charging voltage. Furthermore, stopping the time measurement before the capacitor reaches the maximum possible charging voltage, allows to accelerate the charging process by increasing the effective charging voltage afterwards and/or allows to prepare the normal operation of the arrangement. For example, the main interrupter 12 can be closed after termination of the time measurement. As a consequence, the charging resistor 10 is by-passed. Preferably, the charging contactor 8 will be opened after closing the main interrupter 12.

At step S4, the evaluation of the time measurement is performed. An embodiment, which corresponds to the presently known best mode of the invention, will be described in the following. The measured time (i.e. the length of the time interval) is compared to a comparison value, which may be stored in a data storage or which may be derived from a plurality of stored values. If the measured time and the comparison value differ by more than a defined threshold value, it is decided that the full capacity has not been charged or discharged. Preferably, the amount of the difference is evaluated in addition and it is decided how many groups and/or single capacitors have not been charged or discharged.

In case of a plurality of capacitors or groups of capacitors, which are connected in parallel to each other and which have the same nominal capacitance, the comparison value corresponds to the charging/discharging time of one of the capacitors or of one of the groups of capacitors. Thus, the ratio of the measured time to the comparison value is a measure of the number of available capacitors or groups of capacitors.

Due to manufacturing tolerances and/or due to changes of properties of the electric components or elements, which are used during the charging and/or discharging process, as well as due to a varying voltage and/or other conditions of operation (e.g. ambient temperature), it might be difficult to decide how many of the capacitors or groups of capacitors are available. To overcome this problem, two measures are proposed, which can be applied separately or, preferably, in combination.

First, it is proposed to measure the voltage used for charging or to measure a voltage, which influences the discharging. In the evaluation process, the comparison value is then adapted to the measured voltage. For example, the stored or derived comparison value corresponds to a defined reference voltage (e.g. the maximum voltage that might occur). In this case, the comparison value is adapted correspondingly to the difference of the actual voltage and the reference voltage. Alternatively, the comparison is not adapted, but the measured time (which depends on the actual voltage) is adapted correspondingly to the difference of the actual voltage and the reference voltage. The charging/discharging time can be treated as proportional to the voltage.

Second, at least one time value of a previously measured time interval of charging or discharging is stored and the latest measured time value is compared to the stored value or to an average value of the stored values. For example, a number (e.g. ten) of previously measured time values are stored and, after evaluation, the latest time value is used to replace the oldest of the stored values (ring buffer principle). As a consequence, the tolerances due to variations in the manufacturing of the capacitors (deviations from the nominal capacitance) and tolerances of the other electric parts, which influence the charging/discharging time, can be eliminated. Furthermore, the effect of aging of the electric components or elements and systematic influences of operating conditions can be eliminated.

When the arrangement is charged for the first time, the time that corresponds to the nominal capacitance of all capacitors can be used as comparison value. Further, it is possible to store this nominal value permanently and to use it (at least from time to time) in order to determine whether the capacitor's charging properties have degraded.

At step S5 in Fig. 4, appropriate actions are taken, depending on the result of the evaluation. For example, the maximum power of the power consumer is limited to a reduced value, if a part of the capacitance in the intermediate circuit is no longer available. Thus, the capacitor(s) in the intermediate circuit is/are protected from overload, although the power consumer is operated.

The control device 40 shown in Fig. 2 comprises, for example, the arrangement that is schematically shown in Fig. 3: a measurement unit 42, which is adapted to measure various quantities of the arrangement 1, is connected via signal lines 31, 33, 35, 37 to other parts of the arrangement 1. In the particular embodiment shown in the figures, the signal lines 31, 33 are connected to the first 13 and second 15 direct current connection lines, respectively, in order to measure the voltage between the lines 13, 15. Furthermore, the signal lines 35, 37 are connected to opposite sides of the power source 3, in particular to a primary side (as shown in Fig. 1) or a secondary side of a power transformer.

The measurement unit 42 is connected to a trigger 44 via a connection line 43. Furthermore, the trigger 44 is connected to a measurement device 48 for measuring the time needed for charging and/or discharging the at least one capacitor via a connection line 45. Via a connection line 51, the measurement device 48 is connected to an evaluation device 50 for evaluating whether the capacitor has been charged and/or discharged or whether all the capacitors have been charged and/or discharged. The evaluation device 50 is connected to the measurement unit 42 via a connection line 47 and to the data storage 46 via a connection line 49.

For example, the units and devices described in the preceding paragraph may be connected to each other via a data bus and/or may be part of a central control equipment for controlling the operation of the arrangement 1. In particular, they may be part of a digital computer. Also, it is possible that one or more than one of the units and devices are integrated in one unit or device.

An example of the operation of the control device 40 will be described in the following:
The measurement unit 42 determines the voltage between the first 13 and the second 15 direct current connection lines as a measure for the charging state of the capacitors 34 and 17 to 20. A measure of the voltage is transferred to the trigger 44, which triggers the beginning of a time measurement by the measurement device 48, e.g. when the voltage has reached a pre-determined value during the charging of the at least one capacitor. The pre-determined value may be stored in the trigger 44 and/or in another device, which is connected to the trigger. Optionally, the pre-determined value can be amended.
Furthermore, a measure of the voltage of the power source 3 is transferred to the evaluation device 50 and, according to a preferred embodiment, to the trigger 44. When the voltage between the first 13 and the second 15 direct current connection lines has reached a pre-determined value or, according to a preferred embodiment, a pre-determined percentage of the voltage of the power source 3, the trigger 44 triggers the termination of the time measurement, i.e. the end of the time interval. The pre-determined value and/or the pre-determined percentage is stored in the trigger 44 and/or in another
device, which is connected to the trigger. Optionally, the pre-determined value and/or the pre-determined percentage can be amended.

The evaluation device 50 evaluates whether the capacitor has been charged and/or discharged or whether all the capacitors have been charged and/or discharged. For the evaluation, at least one comparison value is transferred from the data storage 46 to the evaluation device 50, e.g. the mean value of a plurality of previous measures of the time interval. If all capacitors have been charged and/or discharged correctly, the measure of the time interval of charging/discharging is transferred from the evaluation device 50 to the data storage 46. According to a preferred embodiment, the measure is corrected for variations of the voltage, which is used for charging the at least one capacitor, and/or for variations of the voltage, which influences the discharging of the at least one capacitor. The evaluation device 50 may perform the correction.

According to an exemplary embodiment, the evaluation device 50 also or alternatively performs a comparison between the measure of the time interval of charging/discharging and a second comparison value, which represents the nominal or original capacitance of the at least one capacitor. The measure or the second comparison value may be corrected for variations of the operating conditions (e.g. the charging/discharging voltage used) in a corresponding manner as described above. The second comparison value may be inherent in a software, which is used for operation of the evaluation device 50.

As a result, it is possible to perform checks on a regular basis whether the capacitance of the at least one capacitor still lies within an acceptable range, or whether it has become necessary to replace the capacitor (or one of the capacitors) due to the results of aging.

## Claims

1. An arrangement (1) for transferring electric power from a power source to an electric power consumer (5), in particular to a driving motor of a railroad vehicle, wherein the arrangement comprises
• an input side for connecting the arrangement to the power source;
• a direct current intermediate circuit (9), wherein the intermediate circuit (9) comprises a first (13) and a second (15) direct current connection line, the first and the second direct current connection lines being connected to the input side; and
• a current converter (11) for inverting a direct current and for delivering alternating current power to the power consumer (5), wherein the current converter is connected to the first (13) and to the second (15) direct current connection line;
wherein at least one capacitor (17 to 20) is provided in the intermediate circuit (9), the capacitor having two opposite poles, wherein a first pole is connected to the first direct current connection line (13) and wherein the second pole is connected to the second direct current connection line (15),
**characterized by**
- a measurement device (48) which is connected to the intermediate circuit (9) wherein the measurement device is adapted to measure a time interval of charging and/or discharging the at least one capacitor (17 to 20) via a resistor (10) which is used for limiting the charging/discharging current and
- an evaluation device (50) which is connected to the measurement device and which is adapted to evaluate the time interval in order to decide whether the capacitor (17 to 20) has been charged and/or discharged or to decide whether all the capacitors (17 to 20) have been charged and/or discharged.

2. The arrangement of claim 1, wherein the measurement device (48) is connected to a voltage measuring means (42), which is adapted to determine a measure of a voltage that is dependent on the charging state of the at least one capacitor (17 to 20).

3. The arrangement of claim 2, wherein the voltage measuring means (42) is combined with a trigger (44) for triggering the beginning and/or the end of the time interval depending on the measured voltage.

4. The arrangement of one of claims 1 to 3, wherein a voltage determination device (42) is connected to the evaluation device (50) and wherein the voltage determination device (42) is adapted to determine a measure of a voltage used for charging the at least one capacitor (17 to 20) and/or to determine a measure of a voltage which influences the discharging of the at least one capacitor (17 to 20).

5. The arrangement of one of claims 1 to 4, comprising a memory device (46) for storing at least one value of the time interval, wherein the memory device (46) is connected to the evaluation device (50).

6. A method of operating an arrangement (1) for transferring electric-power from a power source to an electric power consumer (5), in particular to a driving motor of a railroad vehicle, wherein the arrangement comprises
• a direct current intermediate circuit (9), wherein the intermediate circuit (9) comprises a first (13) and a second (15) direct current connection line, as well as
• a current converter (11) for inverting a direct current and for delivering alternating current power to the power consumer (5), wherein the current converter is connected to the first (13) and to the second (15) direct current connection line,
wherein at least one capacitor (17 to 20) is provided in the intermediate circuit (9), the capacitor having two opposite poles, wherein a first pole is connected to the first direct current connection line (13) and wherein the second pole is connected to the second direct current connection line (15),
**characterized in that**
- a time interval of charging and/or discharging the at least one capacitor (17 to 20) is measured, wherein the charging/discharging is performed via a resistor (10), and
- the time interval is evaluated in order to decide whether the capacitor (17 to 20) has been charged and/or discharged or in order to decide whether all the capacitors (17 to 20) have been charged and/or discharged.

7. The method of claim 6, wherein a voltage, which is dependent on the charging state of the at least one capacitor (17 to 20), is measured.

8. The method of claim 7, wherein the beginning and/or the end of the time interval is triggered depending on the measured voltage.

9. The method of one of claims 6 to 8, wherein a measure of a voltage is determined, which is used for charging the at least one capacitor (17 to 20), and/or a measure of a voltage is determined, which influences the discharging of the at least one capacitor (17 to 20), and wherein the measure is taken into account, when the decision is made whether the capacitor (17 to 20) has been charged and/or discharged or whether all the capacitors (17 to 20) have been charged and/or discharged.

10. The method of one of claims 6 to 9, wherein the time interval of charging and/or discharging the at least one capacitor (17 to 20) is repeatedly measured and wherein at least one duration value of a previous time interval of charging/discharging is taken into account, when the decision is made whether the capacitor (17 to 20) has been charged and/or discharged or whether all the capacitors (17 to 20) have been charged and/or discharged.

11. The method of one of claims 6 to 10, wherein a comparison value for the time interval of charging and/or discharging the at least one capacitor (17 to 20) is stored and used in order to decide whether a capacity of the at least one capacitor (17 to 20) has degraded.

## Patentansprüche

1. Anordnung (1) zum Übertragen elektrischer Leistung von einer Stromquelle zu einem Stromverbraucher (5), insbesondere einem Antriebsmotor eines Schienenfahrzeugs, wobei die Anordnung Folgendes umfasst:
• eine Eingangsseite zum Anschließen der Anordnung an die Stromquelle;
• einen Gleichstromzwischenkreis (9), wobei der Zwischenkreis (9) eine erste (13) und eine zweite (15) Gleichstromverbindungsleitung umfasst, wobei die erste und die zweite Gleichstromverbindungsleitung mit der Eingangsseite verbunden sind; und
• einen Stromwandler (11) zum Invertieren eines Gleichstroms und zum Liefern von Wechselstromleistung an den Stromverbraucher (5), wobei der Stromwandler an die erste (13) und an die zweite (15) Gleichstromverbindungsleitung angeschlossen ist;
wobei mindestens ein Kondensator (17 bis 20) in dem Zwischenkreis (9) vorgesehen ist, wobei der Kondensator zwei entgegengesetzte Pole aufweist, wobei ein erster Pol an die erste Gleichstromverbindungsleitung (13) angeschlossen ist und wobei der zweite Pol an die zweite Gleichstromverbindungsleitung (15) angeschlossen ist,
**gekennzeichnet durch**
- eine Messeinrichtung (48), die an den Zwischenkreis (9) angeschlossen ist,
wobei die Messeinrichtung ausgelegt ist zum Messen eines Zeitintervalls des Ladens und/oder Entladens des mindestens einen Kondensators (17 bis 20) über einen Widerstand (10), der dazu verwendet wird, den Lade-/Entladestrom zu begrenzen, und
- eine Auswertungseinrichtung (50), die an die Messeinrichtung angeschlossen ist und die ausgelegt ist zum Auswerten des Zeitintervalls, um zu entscheiden, ob der Kondensator (17 bis 20) geladen und/oder entladen worden ist, oder um zu entscheiden, ob alle Kondensatoren (17 bis 20) geladen und/oder entladen worden sind.

2. Anordnung nach Anspruch 1, wobei die Messeinrichtung (48) an ein Spannungsmessmittel (42) angeschlossen ist, das ausgelegt ist zum Bestimmen eines Maßes einer Spannung, die von dem Ladezustand des mindestens einen Kondensators (17 bis 20) abhängt.

3. Anordnung nach Anspruch 2, wobei das Spannungsmessmittel (42) mit einem Auslöser (44) kombiniert ist zum Auslösen des Beginns und/oder des Endes des Zeitintervalls in Abhängigkeit von der gemessenen Spannung.

4. Anordnung nach einem der Ansprüche 1 bis 3, wobei eine Spannungsbestimmungseinrichtung (42) an die Auswertungseinrichtung (50) angeschlossen ist und wobei die Spannungsbestimmungseinrichtung (42) ausgelegt ist zum Bestimmen eines Maßes einer Spannung, die zum Laden des mindestens einen Kondensators (17 bis 20) verwendet wird, und/oder zum Bestimmen eines Maßes einer Spannung, die das Entladen des mindestens einen Kondensators (17 bis 20) beeinflusst.

5. Anordnung nach einem der Ansprüche 1 bis 4, umfassend eine Speichereinrichtung (46) zum Speichern mindestens eines Werts des Zeitintervalls, wobei die Speichereinrichtung (46) an die Auswertungseinrichtung (50) angeschlossen ist.

6. Verfahren zum Betreiben einer Anordnung (1) zum Übertragen elektrischer Leistung von einer Stromquelle zu einem Stromverbraucher (5), insbesondere einem Antriebsmotor eines Schienenfahrzeugs, wobei die Anordnung Folgendes umfasst:
• einen Gleichstromzwischenkreis (9) wobei der Zwischenkreis (9) eine erste (13) und eine zweite (15) Gleichstromverbindungsleitung umfasst, sowie
• einen Stromwandler (11) zum Invertieren eines Gleichstroms und zum Liefern einer Wechselstromleistung an den Stromverbraucher (5), wobei der Spannungswandler an die erste (13) und die zweite (15) Gleichstromverbindungsleitung angeschlossen ist,
wobei mindestens ein Kondensator (17 bis 20) in dem Zwischenkreis (9) vorgesehen ist, wobei der Kondensator zwei entgegengesetzte Pole aufweist, wobei ein erster Pol an die erste Gleichstromverbindungsleitung (13) angeschlossen ist und wobei der zweite Pol an die zweite Gleichstromverbindungsleitung (15) angeschlossen ist,
**dadurch gekennzeichnet, dass**
- ein Zeitintervall des Ladens und/oder Entladens des mindestens einen Kondensators (17 bis 20) gemessen wird, wobei das Laden/Entladen über einen Widerstand (10) erfolgt, und
- das Zeitintervall ausgewertet wird, um zu entscheiden, ob der Kondensator (17 bis 20) geladen und/oder entladen worden ist oder um zu entscheiden, ob alle Kondensatoren (17 bis 20) geladen und/oder entladen worden sind.

7. Verfahren nach Anspruch 6, wobei eine Spannung, die von dem Ladezustand des mindestens einen Kondensators (17 bis 20) abhängt, gemessen wird.

8. Verfahren nach Anspruch 7, wobei der Beginn und/oder das Ende des Zeitintervalls in Abhängigkeit von der gemessenen Spannung ausgelöst werden.

9. Verfahren nach einem der Ansprüche 6 bis 8, wobei ein Maß einer Spannung bestimmt wird, die verwendet wird, um den mindestens einen Kondensator (17 bis 20) zu laden, und/oder ein Maß einer Spannung bestimmt wird, die das Entladen des mindestens einen Kondensators (17 bis 20) beeinflusst, und wobei das Maß berücksichtigt wird, wenn die Entscheidung erfolgt, ob der Kondensator (17 bis 20) geladen und/oder entladen worden ist, oder ob alle Kondensatoren (17 bis 20) geladen und/oder entladen worden sind.

10. Verfahren nach einem der Ansprüche 6 bis 9, wobei das Zeitintervall des Ladens und/oder Entladens des mindestens einen Kondensators (17 bis 20) wiederholt gemessen wird und wobei mindestens ein Dauerwert eines vorausgegangenen Zeitintervalls des Ladens/Entladens berücksichtigt wird, wenn die Entscheidung erfolgt, ob der Kondensator (17 bis 20) geladen und/oder entladen worden ist, oder ob alle Kondensatoren (17 bis 20) geladen und/oder entladen worden sind.

11. Verfahren nach einem der Ansprüche 6 bis 10, wobei ein Vergleichswert für das Zeitintervall des Ladens und/oder Entladens des mindestens einen Kondensators (17 bis 20) gespeichert und verwendet wird, um zu entscheiden, ob sich eine Kapazität des mindestens einen Kondensators (17 bis 20) verschlechtert hat.

## Revendications

1. Agencement (1) pour transférer de l'énergie électrique d'une source d'énergie à un consommateur d'énergie électrique (5), en particulier à un moteur d'entraînement d'un véhicule ferroviaire, dans lequel l'agencement comprend:
- un côté entrée pour connecter l'agencement à la source d'énergie;
- un circuit intermédiaire de courant continu (9), dans lequel le circuit intermédiaire (9) comprend des première (13) et seconde (15) lignes de connexion de courant continu, les première et seconde lignes de connexion de courant continu étant connectées au côté entrée; et
- un convertisseur de courant (11) pour convertir un courant continu et pour distribuer un courant alternatif au consommateur d'énergie électrique (5), dans lequel le convertisseur de courant est connecté aux première (13) et seconde (15) lignes de connexion de courant continu; dans lequel au moins un condensateur (17 à 20) est prévu dans le circuit intermédiaire (9), le condensateur comportant deux pôles opposés, dans lequel un premier pôle est connecté à la première ligne de connexion de courant continu (13) et dans lequel le second pôle est connecté à la seconde ligne de connexion de courant continu (15),
**caractérisé par**
- un dispositif de mesure (48) qui est connecté au circuit intermédiaire (9), dans lequel le dispositif de mesure est adapté pour mesurer un intervalle de temps de charge et/ou décharge de l'au moins un
condensateur (17 à 20) par l'intermédiaire d'une résistance (10) qui est utilisée pour limiter le courant de charge/décharge et
-- un dispositif d'évaluation (50) qui est connecté au dispositif de mesure et qui est adapté pour évaluer l'intervalle de temps afin de décider si le condensateur (17 à 20) a été chargé et/ou déchargé ou de décider si tous les condensateurs (17 à 20) ont été chargés et/ou déchargés.

2. Agencement selon la revendication 1, dans lequel le dispositif de mesure (48) est connecté à un moyen de mesure de tension (42), qui est adapté pour déterminer une mesure d'une tension qui dépend de l'état de charge de l'au moins un condensateur (17 à 20).

3. Agencement selon la revendication 2, dans lequel le moyen de mesure de tension (42) est associé à un déclencheur (44) pour déclencher le commencement et/ou la fin de l'intervalle de temps suivant la tension mesurée.

4. Agencement selon une des revendications 1 à 3, dans lequel un dispositif de détermination de tension (42) est connecté au dispositif d'évaluation (50) et dans lequel le dispositif de détermination de tension (42) est adapté pour déterminer une mesure d'une tension utilisée pour charger l'au moins un condensateur (17 à 20) et/ou pour déterminer une mesure d'une tension qui influence la décharge de l'au moins un condensateur (17 à 20).

5. Agencement selon une des revendications 1 à 4, comprenant une dispositif de mémoire (46) pour stocker au moins une valeur de l'intervalle de temps, dans lequel le dispositif de mémoire (46) est connecté au dispositif d'évaluation (50).

6. Procédé de fonctionnement d'un agencement (1) pour transférer de l'énergie électrique d'une source d'énergie à un consommateur d'énergie électrique (5), en particulier à un moteur d'entraînement d'un véhicule ferroviaire, dans lequel l'agencement comprend :
- un circuit intermédiaire de courant continu (9), dans lequel le circuit intermédiaire (9) comprend des première (13) et seconde (15) lignes de connexion de courant continu, ainsi que
- un convertisseur de courant (11) pour convertir un courant continu et pour distribuer un courant alternatif au consommateur d'énergie électrique (5), dans lequel le convertisseur de courant est connecté aux première (13) et seconde (15) lignes de connexion de courant continu, dans lequel au moins un condensateur (17 à 20) est prévu dans le circuit intermédiaire (9), le condensateur comportant deux pôles opposés, dans lequel un premier pôle est connecté à la première ligne de connexion de courant continu (13) et dans lequel le second pôle est connecté à la seconde ligne de connexion de courant continu (15),
**caractérisé en ce que**
- un intervalle de temps de charge et/ou décharge de l'au moins un condensateur (17 à 20) est mesuré, dans lequel la charge/décharge est réalisée par l'intermédiaire d'une résistance (10), et
- l'intervalle de temps est évalué afin de décider si le condensateur (17 à 20) a été chargé et/ou déchargé ou afin de décider si tous les condensateurs (17 à 20) ont été chargés et/ou déchargés.

7. Procédé selon la revendication 6, dans lequel une tension, qui dépend de l'état de charge de l'au moins un condensateur (17 à 20), est mesurée.

8. Procédé selon la revendication 7, dans lequel le commencement et/ou la fin de l'intervalle de temps est déclenché suivant la tension mesurée.

9. Procédé selon une des revendications 6 à 8, dans lequel une mesure d'une tension est déterminée, qui est utilisée pour charger l'au moins un condensateur (17 à 20), et/ou une mesure d'une tension est déterminée, qui influence la décharge de l'au moins un condensateur (17 à 20), et dans lequel la mesure est prise en compte, lorsqu'il est décidé si le condensateur (17 à 20) a été chargé et/ou déchargé ou si tous les condensateurs (17 à 20) ont été chargés et/ou déchargés.

10. Procédé selon une des revendications 6 à 9, dans lequel l'intervalle de temps de charge et/ou décharge de l'au moins un condensateur (17 à 20) est mesuré à plusieurs reprises et dans lequel au moins une valeur de durée d'un intervalle de temps précédent de charge/décharge est prise en compte, lorsqu'il est décidé si le condensateur (17 à 20) a été chargé et/ou déchargé ou si tous les condensateurs (17 à 20) ont été chargés et/ou déchargés.

11. Procédé selon une des revendications 6 à 10, dans lequel une valeur de comparaison pour l'intervalle de temps de charge et/ou décharge de l'au moins un condensateur (17 à 20) est stockée et utilisée afin de décider si une capacité de l'au moins un condensateur (17 à 20) s'est dégradée.
